Europäisches Patentamt

European Patent Office

Office européen des brevets

(19)

(11) Numéro de publication : **0 091 356**
**B1**

(12) **FASCICULE DE BREVET EUROPÉEN**

(45) Date de publication du fascicule du brevet :
28.05.86

(51) Int. Cl.⁴ : **F 02 G   5/02, F 02 B 37/12**

(21) Numéro de dépôt : **83400641.3**

(22) Date de dépôt : **28.03.83**

(54) **Procédé de récupération d'énergie dans un générateur de puissance, et générateur de puissance pour la mise en oeuvre dudit procédé.**

(30) Priorité : 02.04.82 FR 8205800

(43) Date de publication de la demande :
12.10.83 Bulletin 83/41

(45) Mention de la délivrance du brevet :
28.05.86 Bulletin 86/22

(84) Etats contractants désignés :
BE CH DE GB IT LI NL SE

(56) Documents cités :
EP-A- 0 038 232
DE-A- 2 743 149
DE-B- 2 838 490
FR-A- 2 353 715

(73) Titulaire : **SOCIETE D'ETUDES DE MACHINES THER-
MIQUES S.E.M.T.
2, Quai de Seine
F-93202 Saint-Denis (FR)**

(72) Inventeur : **Bonnaud, Pierre Louis Gilbert
34, rue Victor Hugo
F-78420 Carrieres s/Seine (FR)**

(74) Mandataire : **Weinmiller, Jürgen et al
Zeppelinstrasse 63
D-8000 München 80 (DE)**

EP 0 091 356 B1

Jouve, 18, rue St-Denis, 75001 Paris, France

## Description

La présente invention a pour objet un procédé de récupération d'énergie dans un système générateur de puissance du type comprenant un moteur à combustion interne, notamment un moteur diesel, un compresseur d'air de suralimentation relié, en aval, au collecteur d'admission du moteur et couplé à une turbine à gaz d'échappement reliée, en amont au collecteur d'échappement du moteur. La présente invention se rapporte également à un générateur de puissance adapté pour la mise en œuvre du procédé selon l'invention.

On connaît, notamment par le document FR-A-2 353 715, un système générateur de puissance du type indiqué ci-dessus, dans lequel on utilise, pour récupérer la chaleur perdue, un générateur de vapeur à fluide auxiliaire chauffé par les gaz d'échappement de la turbine d'entraînement du compresseur d'air de suralimentation du moteur, ce générateur étant utilisé notamment aux fortes charges du moteur.

On connaît également, notamment par le document EP-A-0 038 232, un système du type indiqué dans le premier paragraphe, dans lequel en outre un débit dérivé d'air comprimé est prélevé entre le compresseur et le moteur sur le débit total d'air comprimé refoulé par le compresseur, et est ajouté aux gaz d'échappement avant la sortie des gaz de la turbine. On utilise un réchauffeur du débit dérivé d'air comprimé, chauffé directement par les gaz d'échappement de la turbine, ce réchauffeur étant utilisé notamment aux faibles charges du moteur.

Ce dernier système présente néanmoins l'inconvénient d'introduire une perte de charge dans le circuit d'échappement du moteur, ce qui est préjudiciable aux performances de celui-ci en particulier à son rendement.

D'autre part, cette disposition rend difficile, sinon impossible, l'utilisation du générateur de vapeur tel que celui décrit dans le document FR-A-2 353 715, du fait qu'une grande partie de l'énergie des gaz est consommée dans le réchauffeur d'air comprimé.

La présente invention a pour but de résoudre les inconvénients précités en proposant un procédé de récupération d'énergie dans un système générateur de puissance comprenant un moteur à combustion interne, notamment un moteur diesel, un compresseur d'air de suralimentation relié, en aval, au collecteur d'admission du moteur et couplé à une turbine à gaz d'échappement reliée en amont, au collecteur d'échappement du moteur, un débit dérivé d'air comprimé étant prélevé entre le compresseur et le moteur sur le débit total d'air comprimé refoulé par ledit compresseur, et ajouté aux gaz d'échappement avant la sortie de ladite turbine, caractérisé en ce que les gaz sortant de ladite turbine jouent le rôle de fluide chauffant dans un générateur de vapeur à fluide auxiliaire relié, en aval, à une turbine à vapeur auxiliaire, aux faibles charges du moteur

la vapeur de fluide auxiliaire ainsi produite réchauffant le débit dérivé d'air comprimé avant qu'elle n'entre dans ladite turbine à vapeur auxiliaire, et aux fortes charges du moteur la vapeur de fluide auxiliaire alimentant uniquement la turbine à vapeur auxiliaire.

La limite entre faibles charges et fortes charges du moteur est environ égale à 50 % de la charge maximale du moteur.

La présente invention a également pour objet un générateur de puissance, pour la mise en œuvre du procédé précité, du type comprenant un moteur à combustion interne, notamment un moteur diesel, un compresseur d'air de suralimentation relié, en aval, au collecteur d'admission du moteur et couplé à une turbine à gaz d'échappement reliée, en amont, au collecteur d'échappement du moteur, un conduit de dérivation reliant la conduite de refoulement d'air comprimé du compresseur à la voie d'écoulement des gaz d'échappement ; et un dispositif de récupération d'énergie, caractérisé en ce que ledit dispositif comprend un générateur de vapeur à fluide auxiliaire relié, en amont côté fluide chauffant, à la sortie de gaz de la turbine et, en aval côté fluide chauffé, à une turbine à vapeur auxiliaire, et un échangeur de chaleur traversé par ledit conduit de dérivation et intercalé dans un conduit de vapeur auxiliaire reliant la sortie dudit générateur de vapeur auxiliaire à l'entrée de ladite turbine à vapeur auxiliaire, un conduit de dérivation étant branché sur le conduit de vapeur auxiliaire en amont et en aval de l'échangeur de chaleur, une vanne à deux voies étant prévue à l'extrémité amont dudit conduit de dérivation.

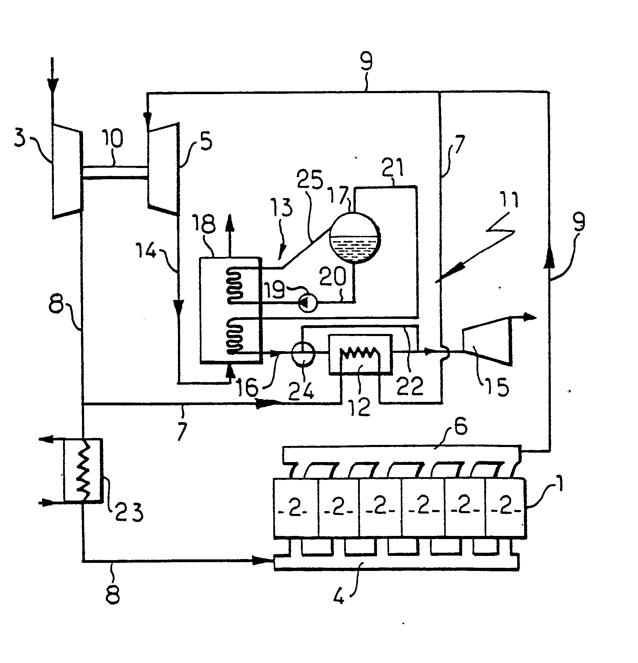

L'invention sera mieux comprise, et d'autres buts, caractéristiques, détails et avantages de celle-ci apparaîtront plus clairement au cours de la description explicative qui va suivre faite en se référant au dessin schématique annexé donné uniquement à titre d'exemple non limitatif dans lequel la figure unique représente un diagramme synoptique fonctionnel d'un mode de réalisation spécifique actuellement préféré de l'invention.

Le générateur de puissance représenté sur cette figure unique comprend un moteur à combustion interne 1, notamment un moteur diesel par exemple à six cylindres 2, un compresseur 3 d'air de suralimentation relié, en aval, au collecteur 4 d'admission du moteur et couplé, par un arbre 10, à une turbine 5 à gaz d'échappement reliée en amont, au collecteur 6 d'échappement du moteur. Un conduit de dérivation 7 relie la conduite 8 de refoulement d'air comprimé du compresseur 3 à la voie d'écoulement 9 des gaz d'échappement. Le conduit de dérivation 7 est de préférence branché en amont d'un réfrigérant 23 de l'air comprimé.

Le dispositif 11 de récupération d'énergie selon l'invention comprend un générateur 13 de vapeur de fluide auxiliaire (par exemple de l'eau) relié en amont côté fluide chauffant, à la sortie de gaz de la turbine par un conduit 14, et, en aval, côté fluide chauffé, à une turbine à vapeur auxiliaire 15 par un conduit 16.

Le générateur 13 de vapeur est constitué par exemple d'un ballon de fluide 17 relié pour l'alimentation en liquide, à une chaudière 18 par une conduite 20 où est de préférence intercalée une pompe 19, une conduite de retour 25 étant prévue pour ramener la vapeur au ballon 17 ; tandis qu'une autre conduite 21 amène la vapeur du ballon 17 au conduit 16 reliant le générateur de vapeur à la turbine à vapeur auxiliaire 15 en passant de préférence dans la chaudière 18.

Le dispositif 11 de récupération d'énergie selon l'invention comprend de plus un échangeur de chaleur 12 traversé par le conduit de dérivation 7 et intercalé dans le conduit 16 de vapeur auxiliaire reliant la sortie du générateur 13 de vapeur auxiliaire à l'entrée de la turbine à vapeur auxiliaire 15.

Ainsi, dans un système générateur de puissance de ce type dans lequel un débit dérivé d'air comprimé est prélevé entre le compresseur 3 et le moteur 1 sur le débit total d'air comprimé refoulé par ledit compresseur, et ajouté aux gaz d'échappement avant la sortie des gaz de la turbine 5, les gaz sortant de la turbine 5 jouent le rôle de fluide chauffant dans le générateur 13 de vapeur de fluide auxiliaire relié, en aval, à la turbine à vapeur auxiliaire 15. La vapeur de fluide auxiliaire ainsi produite réchauffe le débit dérivé d'air comprimé avant que cette vapeur n'entre dans la turbine à vapeur auxiliaire 15.

On peut avantageusement brancher un conduit de dérivation 22 sur le conduit 16 de vapeur auxiliaire, en amont et en aval de l'échangeur de chaleur 12, et prévoir une vanne à deux voies 24 à l'extrémité amont du conduit de dérivation 22 de façon à ouvrir ledit conduit de dérivation en fermant le conduit principal traversant l'échangeur de chaleur 12, et réciproquement. Ainsi, aux faibles charges du moteur, la vapeur de fluide auxiliaire réchauffe le débit dérivé d'air comprimé avant que celle-ci n'entre dans la turbine à vapeur auxiliaire 15 (le conduit de dérivation 22 est alors fermé) tandis qu'aux fortes charges du moteur, la vapeur de fluide auxiliaire alimente uniquement la turbine à vapeur auxiliaire 15 (le conduit de dérivation 22 est alors ouvert, tandis que le conduit principal traversant l'échangeur de chaleur 12 est fermé). La limite entre faibles charges et fortes charges du moteur est par exemple égale à 50 % de la charge maximale du moteur.

## Revendications

1. Procédé de récupération d'énergie dans un système générateur de puissance comprenant un moteur à combustion interne (1), notamment un moteur diesel, un compresseur (3) d'air de suralimentation relié, en aval, au collecteur (4) d'admission du moteur et couplé à une turbine (5) à gaz d'échappement reliée, en amont, au collecteur (6) d'échappement du moteur ; un débit dérivé d'air comprimé étant prélevé entre le compresseur et le moteur sur le débit total d'air comprimé refoulé par ledit compresseur et ajouté aux gaz d'échappement avant la sortie des gaz de ladite turbine, caractérisé en ce que les gaz sortant de ladite turbine jouent le rôle de fluide chauffant dans un générateur (13) de vapeur à fluide auxiliaire relié, en aval, à une turbine (15) à vapeur auxiliaire, aux faibles charges du moteur la vapeur de fluide auxiliaire ainsi produite réchauffant le débit dérivé d'air comprimé avant qu'elle n'entre dans ladite turbine à vapeur auxiliaire, et aux fortes charges du moteur la vapeur de fluide auxiliaire alimentant uniquement ladite turbine à vapeur auxiliaire.

2. Procédé selon la revendication 1, caractérisé en ce que la limite entre faibles charges et fortes charges du moteur est environ égale à 50 % de la charge maximale du moteur.

3. Générateur de puissance, pour la mise en œuvre du procédé selon l'une des revendications 1 à 2, du type comprenant un moteur à combustion interne (1), notamment un moteur diesel ; un compresseur (3) d'air de suralimentation relié, en aval, au collecteur (4) d'admission du moteur et couplé à une turbine (5) à gaz d'échappement relié, en amont, au collecteur (6) d'échappement du moteur, un conduit de dérivation (7) reliant la conduite (8) de refoulement d'air comprimé du compresseur (3) à la voie d'écoulement (9) des gaz d'échappement ; et un dispositif (11) de récupération d'énergie, caractérisé en ce que ledit dispositif (11) de récupération d'énergie comprend un générateur (13) de vapeur à fluide auxiliaire relié, en amont côté fluide chauffant, à la sortie de gaz de la turbine, et en aval côté fluide chauffé, à une turbine à vapeur auxiliaire (15), et un échangeur de chaleur (12) traversé par ledit conduit de dérivation (7) et intercalé dans un conduit (16) de vapeur auxiliaire reliant la sortie dudit générateur (13) de vapeur auxiliaire à l'entrée de ladite turbine à vapeur auxiliaire (15), un conduit de dérivation (22) étant branché sur le conduit (16) de vapeur auxiliaire en amont et en aval de l'échangeur de chaleur (12), une vanne à deux voies (24) étant prévue à l'extrémité amont dudit conduit de dérivation (22).

## Claims

1. A method for recovering energy in a power generating system comprising an internal combustion engine (1), notably a diesel engine, a supercharge air compressor (3) connected, downstream, to the intake manifold (4) of the engine and coupled to an exhaust gas turbine (5) connected, upstream, to the exhaust manifold (6) of the engine, a compressed air partial flow being withdrawn from the total compressed air flow delivered by said compressor between the compressor and the engine, this partial flow being added to the exhaust gases upstream of the gas outlet from said turbine, characterized in that the gases coming from said turbine fulfil the function of a heating fluid in an auxiliary fluid vapour generator (13) feeding an auxiliary vapour turbine (15), the thus produced auxiliary fluid vapour heating, at small charge rates of the engine, the partial compressed air flow before it enters into said auxiliary vapour turbine, whilst at high charge rates of the engine, said auxiliary fluid vapour only feeds said auxiliary vapour turbine.

2. A method according to claim 1, characterized in that the limit between small charge rates and high charge rates of the engine is situated at about 50 % of the maximum charge rate of the engine.

3. A power generator for the operation of the method according to one of claims 1 and 2, of the type comprising an internal combustion engine (1), notably a diesel engine, a supercharge air compressor (3) connected, downstream, to the intake manifold (4) of the engine and coupled to an exhaust gas turbine (5) connected, upstream, to the exhaust manifold (6) of the engine, a partial flow conduit (7) connecting the compressed air supply duct (8) of the compressor (3) to the exhaust gas flow path (9), and comprising an energy recovery device (11), characterized in that said energy recovery device (11) comprises an auxiliary fluid vapour generator (13) connected, on the heat supply side, to the gas outlet of the turbine, and on the heated fluid side to an auxiliary vapour turbine (15), and a heat exchanger (12) through which runs said partial flow conduit (7) and which is inserted in an auxiliary vapour generator (13) to the inlet of said auxiliary vapour turbine (15), a by-pass duct (22) being branched on the auxiliary vapour duct upstream and downstream of the heat exchanger (12), a two-way valve (24) being provided at the upstream end of said by-pass duct (22).

**Patentansprüche**

1. Verfahren zur Energierückgewinnung in einem Leistungserzeugungssystem, das einen Verbrennungsmotor (1), insbesondere einen Dieselmotor, und einen Kompressor (3) für Verdichtungsluft aufweist, der den Einlaßkollektor (4) des Motors speist und von einer Abgasturbine (5) angetrieben wird, die vom Abgaskollektor (6) des Motors gespeist wird ; wobei ein Teilstrom komprimierter Luft zwischen dem Kompressor und dem Motor vom Gesamtstrom der im Kompressor komprimierten Luft entnommen wird, der den Abgasen vor dem Austritt der Gase aus der Turbine zugefügt wird, dadurch gekennzeichnet, daß die aus der Turbine austretenden Gase die Rolle eines Heizfluids in einem Dampferzeuger (13) mit Hilfsfluid spielen, der eine Hilfs-Dampfturbine (15) speist, wobei im unteren Lastbereich des Motors der so erzeugte Dampf des Hilfsfluids den Teilstrom an Druckluft aufheizt, ehe er in die Hilfs-Dampfturbine eintritt, und bei starker Belastung des Motors der Dampf des Hilfsluids nur die Hilfs-Dampfturbine speist.

2. Verfahren nach Anspruch 1, dadurch gekennzeichnet, daß die Grenze zwischen unterem Lastbereich und starker Belastung des Motors bei etwa 50 % der maximalen Last des Motors liegt.

3. Leistungserzeuger für die Anwendung des Verfahrens nach einem der Ansprüche 1 bis 2, von der Art, die einen Verbrennungsmotor (1), insbesondere einen Dieselmotor, einen Verdichtungsluftkompressor (3) aufweist, der den Einlaßkollektor (4) des Motors speist und von einer Abgasturbine (5) angetrieben wird, die vom Abgaskollektor (6) des Motors gespeist wird, wobei eine Teilstromleitung (7) die Druckluft-Auslaßleitung (8) des Kompressors (3) mit der Abgasleitung (9) verbindet, und mit einer Energierückgewinnungsvorrichtung, dadurch gekennzeichnet, daß die Energierückgewinnungsvorrichtung (11) einen Dampferzeuger (13) mit Hilfsfluid, der als Heizfluid die Ausgangsgase der Turbine zugeführt erhält und das aufgeheizte Fluid auf eine Hilfs-Dampfturbine (15) lenkt, und einen Wärmetauscher (12) aufweist, der von dem Teilstrom (7) durchquert wird und in eine Hilfs-Dampfleitung (16) eingefügt ist, die den Auslaß des Hilfs-Dampferzeugers (13) mit dem Eingang der Hilfs-Dampfturbine (15) verbindet, wobei eine Bypassleitung (22) an die Hilfs-Dampfleitung (16) diesseits und jenseits des Wärmetauschers (12) angeschlossen ist und ein Zweiwegeventil (24) am stromaufwärts liegenden Ende dieser Bypassleitung (22) vorgesehen ist.